# EUROPÄISCHE PATENTSCHRIFT

(11) **EP 2 726 341 B1**
(45) Veröffentlichungstag und Bekanntmachung des Hinweises auf die Patenterteilung: **24.10.2018**
(21) Anmeldenummer: 12724611.4
(22) Anmeldetag: 29.05.2012
(51) Int. Cl.: B60S 1/38

(54) **WISCHVORRICHTUNG, INSBESONDERE KRAFTFAHRZEUGSCHEIBENWISCHVORRICHTUNG**
WIPING DEVICE, IN PARTICULAR WIPING DEVICE FOR A MOTOR VEHICLE PANE
DISPOSITIF D'ESSUYAGE, EN PARTICULIER DISPOSITIF ESSUIE-GLACE DE VÉHICULE À MOTEUR

(30) Priorität: 28.06.2011 DE 102011078183
(43) Veröffentlichungstag der Anmeldung: 07.05.2014
(73) Patentinhaber: Robert Bosch GmbH, 70442 Stuttgart (DE)
(72) Erfinder: DEPONDT, Helmut, B-3010 Kessel-Lo (BE); BEX, Koen, B-3890 Jeuk/Limburg Belgien (BE); HERINCKX, Dirk, B-3350 Dries-Linter (BE)
(86) Internationale Anmeldenummer: PCT/EP2012/059972
(87) Internationale Veröffentlichungsnummer: WO 2013/000649

(56) Entgegenhaltungen:
- EP-A1- 1 627 787
- DE-A1-102007 056 321
- FR-A1- 2 923 785
- FR-A1- 2 943 020
- US-A1- 2007 174 989

## Beschreibung

### Stand der Technik

Es ist bereits eine Wischvorrichtung, insbesondere eine Kraftfahrzeugscheibenwischvorrichtung, mit einem Federelement und einer Halteeinheit, die ein Halteelement mit einem Längsführungskanal zur Führung des Federelements aufweist, und mit einer Windabweisereinheit bekannt.

Eine Wischvorrichtung mit den Merkmalen des Oberbegriffs ist aus der DE 10 2007 056 321 A1 bekannt.

### Offenbarung der Erfindung

Die Erfindung geht aus von einer Wischvorrichtung, insbesondere von einer Kraftfahrzeugscheibenwischvorrichtung, mit einem Federelement und einer Halteeinheit, die ein Halteelement mit einem Längsführungskanal zur Führung des Federelements aufweist, und mit einer Windabweisereinheit.

Es wird vorgeschlagen, dass die Windabweisereinheit zumindest einen Auflagesteg aufweist, der dazu vorgesehen ist, auftretende Anpresskräfte von der Windabweisereinheit auf die Halteeinheit zu übertragen, wobei der zumindest eine Auflagesteg einen zwischen dem Längsführungskanal und der Windabweisereinheit angeordneten Längskanal in zwei Längskanäle unterteilt und somit beidseitig an einen Längskanal angrenzt und mit einem freien Ende am Halteelement anliegt, oder der zumindest eine Auflagesteg mit einem freien Ende am Federelement anliegt., wodurch die Wischvorrichtung bei geringem Gewicht besonders verwindungssteif ausgebildet werden kann.

Unter einem 'Federelement" soll in diesem Zusammenhang insbesondere ein federelastisches Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Unter einer "Halteeinheit" soll dabei in diesem Zusammenhang insbesondere eine Einheit verstanden werden, die dazu vorgesehen ist, die

Windabweisereinheit mit einer Wischleiste zu verbinden. Unter einem "Halteelement" soll dabei in diesem Zusammenhang insbesondere ein Element verstanden werden, das dazu vorgesehen ist, eine Windabweisereinheit, ein Federelement und eine Wischleiste formschlüssig zu verbinden. Unter einem "Längsführungskanal" soll in diesem Zusammenhang insbesondere ein Führungskanal verstanden werden, der sich parallel zu einer Längsrichtung der Halteeinheit erstreckt. Bevorzugt umfasst der Längsführungskanal einen Freiraum sowie zumindest eine den Freiraum begrenzende Kanalwand. Unter einer "Längsrichtung" soll in diesem Zusammenhang insbesondere eine Richtung verstanden werden, die sich im Wesentlichen parallel zu einer Längserstreckung des Halteelements erstreckt. Unter einer "Längserstreckung" soll in diesem Zusammenhang insbesondere eine größtmögliche Erstreckung verstanden werden. Unter "im Wesentlichen" soll in diesem Zusammenhang insbesondere eine Abweichung von weniger als 10°, bevorzugt weniger als 5° verstanden werden. Unter einer "Erstreckung" eines Elements soll in diesem Zusammenhang insbesondere ein maximaler Abstand zweier Punkte einer senkrechten Projektion des Elements auf eine Ebene verstanden werden. Unter einem "Auflagesteg" soll in diesem Zusammenhang insbesondere ein Steg verstanden werden, der einen zwischen Längsführungskanal und Windabweisereinheit angeordneten Längskanal in zwei Längskanäle unterteilt und somit beidseitig an einen Längskanal angrenzt. Unter einer "Windabweisereinheit" soll in diesem Zusammenhang insbesondere eine Einheit verstanden werden, die dazu vorgesehen ist, einen auf die Wischvorrichtung wirkenden Fahrtwind abzuweisen und/oder für ein Anpressen einer Wischleiste auf eine Fahrzeugscheibe zu nutzen. Unter einer "Wischleiste" soll in diesem Zusammenhang insbesondere eine Leiste verstanden werden, die dazu vorgesehen ist, eine Fahrzeugscheibe zu wischen. Bevorzugt ist die Wischleiste aus einem Gummimaterial ausgebildet. Unter "vorgesehen" soll insbesondere speziell ausgelegt und/oder ausgestattet verstanden werden. Bevorzugt weist die Windabweisereinheit zumindest eine konkave Außenfläche auf.

Nach der Erfindung wird vorgeschlagen, dass der zumindest eine Auflagesteg mit einem freien Ende am Halteelement anliegt, wodurch auftretende Anpresskräfte besonders gleichmäßig auf das Halteelement übertragen werden können.

Liegt der zumindest eine Auflagesteg mit einem freien Ende am Federelement an, kann die Wischvorrichtung mit einer besonders flachen Bauhöhe ausgebildet werden.

Es wird vorgeschlagen, dass die Windabweisereinheit in einem Coextrusionsverfahren hergestellt ist, wodurch die Windabweisereinheit besonders stabil und gleichzeitig kostengünstig hergestellt werden kann. Unter einem "Coextrusionsverfahren" soll in diesem Zusammenhang insbesondere das Zusammenführen von zumindest zwei fremdartigen Kunststoffschmelzen vor dem Verlassen einer Profildüse verstanden werden.

Ferner wird vorgeschlagen, dass die Windabweisereinheit zwei unterschiedlich harte Windabweiserteilelemente aufweist, wodurch vorteilhaft Gewicht reduziert und eine Festigkeit erhöht werden kann.

Des Weiteren wird vorgeschlagen, dass das härtere Windabweiserteilelement die Windabweisereinheit seitlich abschließt, wodurch das weichere Windabweiserteilelement vorteilhaft vor Beschädigungen geschützt werden kann. Unter "seitlich" soll in diesem Zusammenhang insbesondere in eine Wischrichtung betrachtet verstanden werden. Unter "abschließen" soll in diesem Zusammenhang insbesondere abdecken, umgeben und/oder verbergen verstanden werden.

In einer weiteren Ausgestaltung der Erfindung wird vorgeschlagen, dass das weichere Windabweiserteilelement einen Längskanal aufweist, der einen dreieckigen Querschnitt umfasst, wodurch vorteilhaft Material und Gewicht eingespart werden können. Unter "dreieckig" soll in diesem Zusammenhang eine Kontur verstanden werden, die drei Ecken aufweist. Die Ecken können je nach Anwendungsfall auch abgerundet sein.

Sind das weichere Windabweiserteilelement und das härtere Windabweiserteilelement in einer Ebene, die parallel zu einer Wischrichtung verläuft, stoffschlüssig und flächig miteinander verbunden, kann eine besonders stabile Verbindung der Windabweiserteilelemente erreicht werden. Unter einer "Wischrichtung" soll in diesem Zusammenhang insbesondere eine Richtung verstanden werden, die sich parallel zu einer zu wischenden Oberfläche und/oder senkrecht zu einer Hauptausrichtung der Wischleiste erstreckt.

Ferner wird vorgeschlagen, dass die Wischvorrichtung eine Halteeinheit umfasst, die ein Halteelement mit einem Längsführungskanal zur Führung eines Federelements aufweist, wobei das Halteelement zumindest ein Befestigungselement aufweist, das dazu vorgesehen ist, die Windabweisereinheit in einem montierten Zustand formschlüssig zu koppeln, wodurch eine besonders sichere Montage der Windabweisereinheit erreicht werden kann. Unter einem "Befestigungselement" soll in diesem Zusammenhang insbesondere ein Element verstanden werden, das dazu vorgesehen ist, einen Formschluss mit einem korrespondierenden Bauteil zu bilden. Unter "koppeln" soll in diesem Zusammenhang insbesondere verbinden und/oder fügen verstanden werden.

In einem Hauptanströmbereich der Wischvorrichtung können Fugen und damit Strömungswiderstände und/oder Geräusche vermieden werden, wenn die Windabweisereinheit am Halteelement im Bereich des Längsführungskanals zumindest teilweise seitlich anliegt. Unter "seitlich" soll in diesem Zusammenhang insbesondere von einer Wischrichtung her kommend verstanden werden.

Ferner wird vorgeschlagen, dass das Halteelement zumindest ein Befestigungsmittel aufweist, das mit einem freien Ende dem Längsführungskanal zugewandt und dazu vorgesehen ist, einen Formschluss mit der Windabweisereinheit zu bilden, wodurch die Wischvorrichtung besonders stabil ausgebildet werden kann.

### Zeichnungen

Weitere Vorteile ergeben sich aus der folgenden Zeichnungsbeschreibung. In der Zeichnung sind sieben Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Schnittdarstellung einer Wischvorrichtung mit einer Halteeinheit,
- Fig. 2: eine Schnittdarstellung eines weiteren Ausführungsbeispiels einer Wischvorrichtung mit einer Halteeinheit,
- Fig. 3: eine Schnittdarstellung eines weiteren Ausführungsbeispiels einer Wischvorrichtung mit einer Halteeinheit,
- Fig. 4: eine Schnittdarstellung eines weiteren Ausführungsbeispiels einer Wischvorrichtung mit einer Halteeinheit,
- Fig. 5: eine Schnittdarstellung eines weiteren Ausführungsbeispiels einer Wischvorrichtung mit einer Halteeinheit,
- Fig. 6: eine Schnittdarstellung eines weiteren Ausführungsbeispiels einer Wischvorrichtung mit einer Halteeinheit und
- Fig. 7: eine Schnittdarstellung eines weiteren Ausführungsbeispiels einer Wischvorrichtung mit einer Halteeinheit.

### Beschreibung der Ausführungsbeispiele

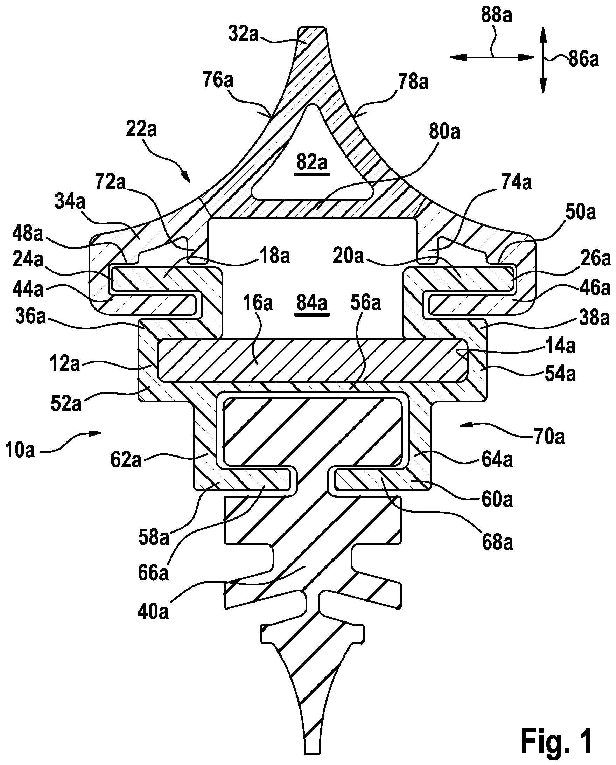

Figur 1 zeigt eine erfindungsgemäße Wischvorrichtung mit einer Halteeinheit 10a mit einem Halteelement 12a, das einen Längsführungskanal 14a zur Führung eines Federelements 16a aufweist, in einer Schnittdarstellung. Die Schnittebene verläuft senkrecht zu einer Längsrichtung des Halteelements 12a.

Das Halteelement 12a weist zwei Befestigungselemente 18a, 20a auf. Die Befestigungselemente 18a, 20a sind einstückig mit dem Halteelement 12a ausgebildet. Die Befestigungselemente 18a, 20a weisen an ihren freien Enden 24a, 26a in voneinander abgewandte Richtungen, die parallel zu einer Wischrichtung 88a verlaufen. Ferner erstrecken sich die Befestigungselemente 18a, 20a L-förmig von Kanalwandungen 36a, 38a aus, die an den Längsführungskanal 14a angrenzen. Ein Abstand zwischen den freien Enden 24a, 26a ist größer als eine Breite des Längsführungskanals 14a. Die Befestigungselemente 18a, 20a sind dazu vorgesehen, eine Windabweisereinheit 22a in einem montierten Zustand formschlüssig zu koppeln. Dazu sind die freien Enden 24a, 26a der Befestigungselemente 18a, 20a von der Windabweisereinheit 22a umschlossen. Die Windabweisereinheit 22a weist zwei L-förmige Befestigungsmittel 44a, 46a sowie an die Befestigungsmittel 44a, 46a angrenzende Auflagekörper 48a, 50a auf.

Zur Führung des Federelements 16a grenzen Seitenwandungen 52a, 54a des Längsführungskanals 14a an die Kanalwandungen 36a, 38a. Die Kanalwandungen 36a, 38a schließen dabei einen rechten Winkel mit den Seitenwandungen 52a, 54a ein. An die Seitenwandungen 52a, 54a ist ferner eine Zwischenwandung 56a angeordnet, die den Längsführungskanal 14a in Richtung einer Wischleiste 40a abschließt. Die Seitenwandungen 52a, 54a erstrecken sich von der Zwischenwandung 56a aus in eine von der Wischleiste 40a abgewandte Richtung. Das Halteelement 12a weist eine Längsöffnung 84a auf, die den Längsführungskanal 14a zur Windabweisereinheit 22a hin öffnet.

An der Zwischenwandung 56a sind zwei L-förmige Führungsprofile 58a, 60a der Halteeinheit 10a angeordnet. Die Führungsprofile 58a, 60a sind einstückig mit dem Halteelement 12a ausgebildet. Die Führungsprofile 58a, 60a weisen jeweils eine Seitenführung 62a, 64a und jeweils eine Vertikalführung 66a, 68a auf. Die Vertikalführungen 66a, 68a schließen mit den Seitenführungen 62a, 64a jeweils einen Winkel von 90° ein. Dabei zeigen die Vertikalführungen 66a, 68a zueinander hin. Die Seitenführungen 62a, 64a schließen jeweils einen Winkel von 90° zur Zwischenwandung 56a ein. Die Führungsprofile 58a, 60a weisen an ihren freien Enden der Vertikalführungen 66a, 68a in einander zugewandte Richtungen. Die Führungsprofile 58a, 60a und die Zwischenwandung 56a bilden eine Kederschiene 70a, in welche die Wischleiste 40a eingeführt ist.

Das Halteelement 12a ist in einem Extrusionsverfahren einstückig aus Polyethylen hergestellt. Ein Fachmann wird in diesem Zusammenhang verschiedene, als sinnvoll erscheinende Kunststoffe in Erwägung ziehen, wie insbesondere Polypropylen, Polyamid, Polyvinylchlorid und/oder Polystyrol.

Die Windabweisereinheit 22a ist in einem Coextrusionsverfahren aus zwei unterschiedlich harten Windabweiserteilelementen 32a, 34a hergestellt. Das erste Windabweiserteilelement 32a weist zwei nach außen hin konkav ausgebildete Windabweiserseiten 76a, 78a auf. Zur Verstärkung der Windabweisereinheit 22a weist das erste Windabweiserteilelement 32a einen Verbindungssteg 80a auf, der die konkaven Windabweiserseiten 76a, 78a miteinander verbindet. Der Verbindungssteg 80a und die Windabweiserseiten 76a, 78a umschließen einen Längskanal 82a, der einen dreieckigen Querschnitt umfasst.

Das erste Windabweiserteilelement 32a ist einstückig mit dem zweiten Windabweiserteilelement 34a ausgebildet und ist zur Abweisung von Fahrtwind vorgesehen. Das zweite Windabweiserteilelement 34a weist eine höhere Festigkeit und Härte auf als das erste Windabweiserteilelement 32a. Am zweiten Windabweiserteilelement 34a sind die L-förmigen Befestigungsmittel 44a, 46a sowie die an die Befestigungsmittel 44a, 46a angrenzenden Auflagekörper 48a, 50a angeformt. Das härtere Windabweiserteilelement 34a umgibt die Befestigungselemente 18a, 20a und schließt somit die Halteeinheit 10a seitlich ab.

Ferner weist das zweite Windabweiserteilelement 34a zwei Auflagestege 72a, 74a auf. Die Auflagestege 72a, 74a liegen mit ihren freien Enden an den Befestigungselementen 18a, 20a des Halteelements 12a an einer der Wischleiste 40a abgewandten Seite an. Die Auflagestege 72a, 74a sind zur Übertragung von Anpresskräften vorgesehen, die an der Windabweisereinheit 22a bei Auftreffen von Fahrtwind entstehen. Die Auflagestege 72a, 74a erstrecken sich über die gesamte Länge der Windabweisereinheit 22a.

Das Federelement 16a ist in den Längsführungskanal 14a eingelassen. Das Federelement 16a ist aus einem Federstahl hergestellt und dazu vorgesehen, die Halteeinheit 10a elastisch auslenkbar zu formen.

Zu einer Montage wird zunächst das Federelement 16a in den Längsführungskanal 14a eingeführt. Anschließend wird die Wischleiste 40a in die Kederschiene 70a eingeschoben und bildet einen Formschluss mit dem Halteelement 12a. Die Windabweisereinheit 22a wird nun über die Befestigungselemente 18a, 20a geschoben und ist dann formschlüssig mit diesen verbunden.

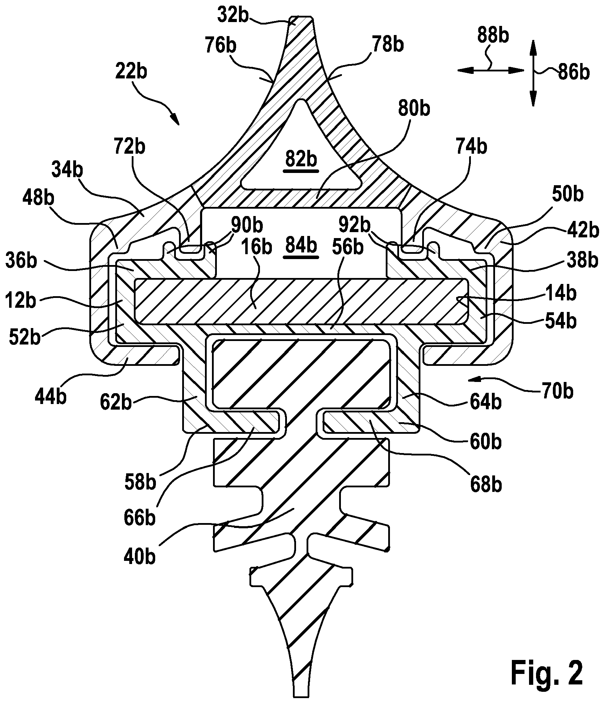

In den Figuren 2 bis 7 sind 6 weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des ersten Ausführungsbeispiels verwiesen werden kann. Zur Unterscheidung der Ausführungsbeispiele ist der Buchstabe a in den Bezugszeichen des Ausführungsbeispiels in der Figur 1 durch die Buchstaben b bis g in den Bezugszeichen der Ausführungsbeispiele der Figuren 2 bis 7 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des ersten Ausführungsbeispiels verwiesen werden.

Figur 2 zeigt ein weiteres Ausführungsbeispiel einer erfindungsgemäßen Wischvorrichtung mit einer Halteeinheit 10b mit einem Halteelement 12b, das einen Längsführungskanal 14b zur Führung eines Federelements 16b aufweist, sowie eine Windabweisereinheit 22b in einer Schnittdarstellung. Die Schnittebene verläuft senkrecht zu einer Längsrichtung des Halteelements 12b.

Die Halteeinheit 10b weist Kanalwandungen 36b, 38b auf, die einstückig mit dem Halteelement 12b ausgebildet sind. Die Kanalwandungen 36b, 38b grenzen an den Längsführungskanal 14b an einer wischleistenabgewandten Seite an. An den Kanalwandungen 36b, 38b sind auf einer wischleistenabgewandten Seite jeweils zwei Längsfortsätze 90b, 92b angeordnet. Die Windabweisereinheit 22b weist zwei L-förmige Befestigungsmittel 44b, 46b sowie an die Befestigungsmittel 44b, 46b angrenzende Auflagekörper 48b, 50b auf.

Zur Führung des Federelements 16b grenzen Seitenwandungen 52b, 54b des Längsführungskanals 14b an die Kanalwandungen 36b, 38b. Die Kanalwandungen 36b, 38b schließen dabei einen rechten Winkel mit den Seitenwandungen 52b, 54b ein. An die Seitenwandungen 52b, 54b ist ferner eine Zwischenwandung 56b angeordnet, die den Längsführungskanal 14b in Richtung einer Wischleiste 40b abschließt. Die Seitenwandungen 52b, 54b erstrecken sich von der Zwischenwandung 56b aus in eine von der Wischleiste 40b abgewandte Richtung. Das Halteelement 12b weist eine Längsöffnung 84b auf, die den Längsführungskanal 14b zur Windabweisereinheit 22b hin öffnet.

An der Zwischenwandung 56b sind zwei L-förmige Führungsprofile 58b, 60b der Halteeinheit 10b angeordnet. Die Führungsprofile 58b, 60b sind einstückig mit dem Halteelement 12b ausgebildet. Die Führungsprofile 58b, 60b weisen jeweils eine Seitenführung 62b, 64b und jeweils eine Vertikalführung 66b, 68b auf. Die Vertikalführungen 66b, 68b schließen mit den Seitenführungen 62b, 64b jeweils einen Winkel von 90° ein. Dabei zeigen die Vertikalführungen 66b, 68b zueinander hin. Die Seitenführungen 62b, 64b schließen jeweils einen Winkel von 90° zur Zwischenwandung 56b ein. Die Führungsprofile 58b, 60b weisen an ihren freien Enden der Vertikalführungen 66b, 68b in einander zugewandte Richtungen. Die Führungsprofile 58b, 60b und die Zwischenwandung 56b bilden eine Kederschiene 70b, in welche die Wischleiste 40b eingeführt ist.

Das Halteelement 12b ist in einem Extrusionsverfahren einstückig aus Polyethylen hergestellt. Ein Fachmann wird in diesem Zusammenhang verschiedene, als sinnvoll erscheinende Kunststoffe in Erwägung ziehen, wie insbesondere Polypropylen, Polyamid, Polyvinylchlorid und/oder Polystyrol.

Die Windabweisereinheit 22b ist in einem Coextrusionsverfahren aus zwei unterschiedlich harten Windabweiserteilelementen 32b, 34b, 42b hergestellt. Das erste Windabweiserteilelement 32b weist zwei nach außen hin konkav ausgebildete Windabweiserseiten 76b, 78b auf. Zur Verstärkung der Windabweisereinheit 22b weist das erste Windabweiserteilelement 32b einen Verbindungssteg 80b auf, der die konkaven Windabweiserseiten 76b, 78b miteinander verbindet. Der Verbindungssteg 80b und die Windabweiserseiten 76b, 78b umschließen einen Längskanal 82b, der einen dreieckigen Querschnitt umfasst.

Das erste Windabweiserteilelement 32b ist einstückig mit dem zweiten Windabweiserteilelement 34b, 42b ausgebildet und ist zur Abweisung von Fahrtwind vorgesehen. Das zweite Windabweiserteilelement 34b, 42b weist eine höhere Festigkeit und Härte auf als das erste Windabweiserteilelement 32b. Am zweiten Windabweiserteilelement 34b, 42b sind die L-förmigen Befestigungsmittel 44b, 46b sowie die an die Befestigungsmittel 44b, 46b angrenzenden Auflagekörper 48b, 50b angeformt. Das härtere Windabweiserteilelement 34b, 42b umgibt das Halteelement 12b im Bereich des Längsführungskanals 14b.

Ferner weist das zweite Windabweiserteilelement 34b, 42b zwei Auflagestege 72b, 74b auf. Die Auflagestege 72b, 74b liegen mit ihren freien Enden an den Kanalwandungen 36b, 38b an einer von der Wischleiste 40b abgewandten Seite an. Die Auflagestege 72b, 74b sind zur Übertragung von Anpresskräften vorgesehen, die an der Windabweisereinheit 22b bei Auftreffen von Fahrtwind entstehen. Die Auflagestege 72b, 74b erstrecken sich über die gesamte Länge der Windabweisereinheit 22b. Die Längsfortsätze 90b, 92b umgeben die Auflagestege 72b, 74b jeweils teilweise in eine Wischrichtung 88b.

Das Federelement 16b ist in den Längsführungskanal 14b eingelassen. Das Federelement 16b ist aus einem Federstahl hergestellt und dazu vorgesehen, die Halteeinheit 10b elastisch auslenkbar zu formen.

Zu einer Montage wird zunächst das Federelement 16b in den Längsführungskanal 14b eingeführt. Anschließend wird die Wischleiste 40b in die Kederschiene 70b eingeschoben und bildet einen Formschluss mit dem Halteelement 12b. Die Windabweisereinheit 22b wird nun über das Halteelement 12b geschoben und ist dann formschlüssig mit diesem verbunden.

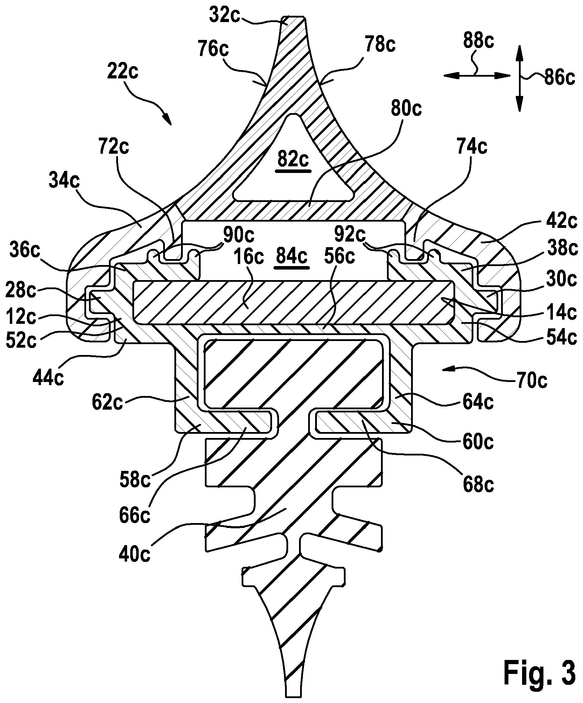

Figur 3 zeigt ein weiteres Ausführungsbeispiel einer erfindungsgemäßen Wischvorrichtung mit einer Halteeinheit 10c mit einem Halteelement 12c, das einen Längsführungskanal 14c zur Führung eines Federelements 16c aufweist, in einer Schnittdarstellung. Die Schnittebene verläuft senkrecht zu einer Längsrichtung des Halteelements 12c. Die gezeigte Wischvorrichtung entspricht im Wesentlichen dem in Figur 2 gezeigten Ausführungsbeispiel.

Am Halteelement 12c ist im Bereich des Längsführungskanals 14c auf jeder in eine Wischrichtung 88c weisenden Seite eine Seitenleiste 28c, 30c angeformt. Die Seitenleisten 28c, 30c bilden im montierten Zustand einen Formschluss mit einer Windabweisereinheit 22c. Der Formschluss vermeidet eine Bewegung der Windabweisereinheit 22c relativ zum Halteelement 12c in eine Vertikalrichtung 86c. Die Vertikalrichtung 86c erstreckt sich senkrecht zur Längsrichtung und senkrecht zur Wischrichtung 88c.

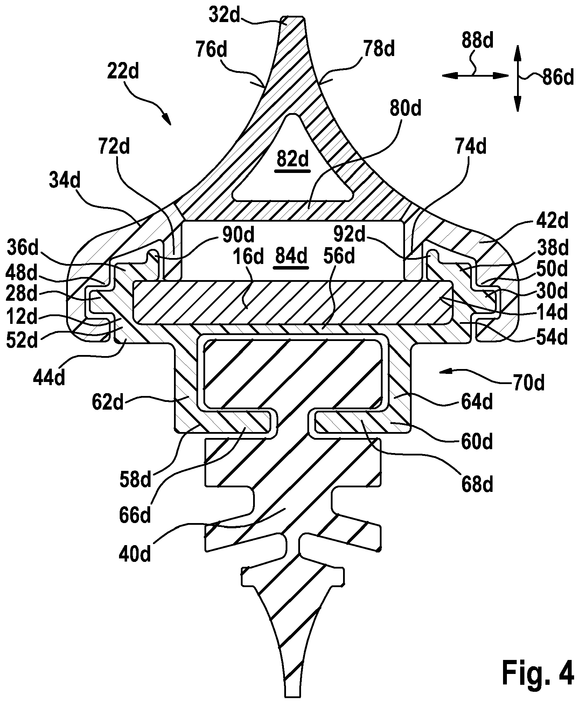

Figur 4 zeigt ein weiteres Ausführungsbeispiel einer erfindungsgemäßen Wischvorrichtung mit einer Halteeinheit 10d mit einem Halteelement 12d, das einen Längsführungskanal 14d zur Führung eines Federelements 16d aufweist, in einer Schnittdarstellung. Die Schnittebene verläuft senkrecht zu einer Längsrichtung des Halteelements 12d. Die gezeigte Wischvorrichtung entspricht im Wesentlichen dem in Figur 3 gezeigten Ausführungsbeispiel.

Die Halteeinheit 10d weist Kanalwandungen 36d, 38d auf, die einstückig mit dem Halteelement 12d ausgebildet sind. Die Kanalwandungen 36d, 38d grenzen an den Längsführungskanal 14d an einer wischleistenabgewandten Seite an. An den Kanalwandungen 36d, 38d ist auf einer wischleistenabgewandten Seite jeweils ein Längsfortsatz 90d, 92d angeordnet.

Am Halteelement 12d ist im Bereich des Längsführungskanals 14d auf jeder in eine Wischrichtung 88d weisenden Seite eine Seitenleiste 28d, 30d angeformt. Die Seitenleisten 28d, 30d bilden im montierten Zustand einen Formschluss mit einer Windabweisereinheit 22d. Der Formschluss vermeidet eine Bewegung der Windabweisereinheit 22d relativ zum Halteelement 12d in eine Vertikalrichtung 86d. Die Vertikalrichtung 86d erstreckt sich senkrecht zur Längsrichtung und senkrecht zur Wischrichtung 88d.

Die Windabweisereinheit 22d ist in einem Coextrusionsverfahren aus zwei unterschiedlich harten Windabweiserteilelementen 32d, 34d, 42d hergestellt. Das erste Windabweiserteilelement 32d weist zwei nach außen hin konkav ausgebildete Windabweiserseiten 76d, 78d auf. Zur Verstärkung der Windabweisereinheit 22d weist das erste Windabweiserteilelement 32d einen Verbindungssteg 80d auf, der die konkaven Windabweiserseiten 76d, 78d miteinander verbindet. Der Verbindungssteg 80d und die Windabweiserseiten 76d, 78d umschließen einen Längskanal 82d, der einen dreieckigen Querschnitt umfasst.

Das erste Windabweiserteilelement 32d ist einstückig mit dem zweiten Windabweiserteilelement 34d, 42d ausgebildet und ist zur Abweisung von Fahrtwind vorgesehen. Das zweite Windabweiserteilelement 34d, 42d weist eine höhere Festigkeit und Härte auf als das erste Windabweiserteilelement 32d. Am zweiten Windabweiserteilelement 34d, 42d sind L-förmige Befestigungsmittel 44d, 46d sowie an die Befestigungsmittel 44d, 46d angrenzende Auflagekörper 48d, 50d angeformt. Das härtere Windabweiserteilelement 34d, 42d umgibt das Halteelement 12d im Bereich des Längsführungskanals 14d.

Ferner weist das zweite Windabweiserteilelement 34d, 42d zwei Auflagestege 72d, 74d auf. Die Auflagestege 72d, 74d liegen mit ihren freien Enden am Federelement 16d an einer von der Wischleiste 40d abgewandten Seite an. Die Auflagestege 72d, 74d sind zur Übertragung von Anpresskräften auf das Federelement 16d vorgesehen, die an der Windabweisereinheit 22d bei Auftreffen von Fahrtwind entstehen. Die Auflagestege 72d, 74d erstrecken sich über die gesamte Länge der Windabweisereinheit 22d. Die Längsfortsätze 90d, 92d liegen an den Auflagestegen 72d, 74d jeweils teilweise in eine Wischrichtung 88d an.

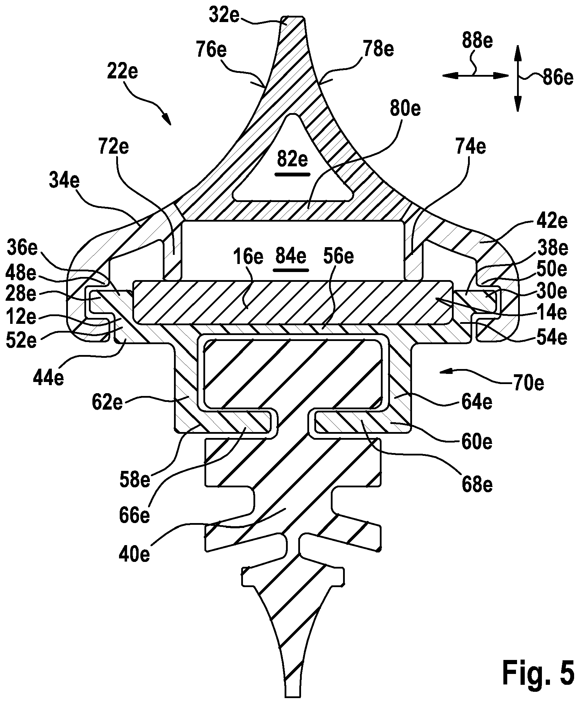

Figur 5 zeigt ein weiteres Ausführungsbeispiel einer erfindungsgemäßen Wischvorrichtung mit einer Halteeinheit 10e mit einem Halteelement 12e, das einen Längsführungskanal 14e zur Führung eines Federelements 16e aufweist, sowie eine Windabweisereinheit 22e in einer Schnittdarstellung. Die Schnittebene verläuft senkrecht zu einer Längsrichtung des Halteelements 12e.

Der Längsführungskanal 14e ist wannenförmig ausgebildet. Der Längsführungskanal 14e ist in Richtung der Windabweisereinheit 22e über die gesamte Breite und Länge geöffnet.

Zur Führung des Federelements 16e weist der Längsführungskanal 14e Seitenwandungen 52e, 54e auf. An die Seitenwandungen 52e, 54e ist ferner eine Zwischenwandung 56e angeordnet, die den Längsführungskanal 14e in Richtung einer Wischleiste 40e abschließt. Die Seitenwandungen 52e, 54e erstrecken sich von der Zwischenwandung 56e aus in eine von der Wischleiste 40e abgewandte Richtung. Das Halteelement 12e weist eine Längsöffnung 84e auf, die den Längsführungskanal 14e zur Windabweisereinheit 22e hin vollständig öffnet.

Am Halteelement 12e ist im Bereich des Längsführungskanals 14e auf jeder in eine Wischrichtung 88e weisenden Seite eine Seitenleiste 28e, 30e angeformt. Die Seitenleisten 28e, 30e bilden im montierten Zustand einen Formschluss mit der Windabweisereinheit 22e. Der Formschluss vermeidet eine Bewegung der Windabweisereinheit 22e relativ zum Halteelement 12e in eine Vertikalrichtung 86e. Die Vertikalrichtung 86e erstreckt sich senkrecht zur Längsrichtung und senkrecht zur Wischrichtung 88e.

An der Zwischenwandung 56e sind zwei L-förmige Führungsprofile 58e, 60e der Halteeinheit 10e angeordnet. Die Führungsprofile 58e, 60e sind einstückig mit dem Halteelement 12e ausgebildet. Die Führungsprofile 58e, 60e weisen jeweils eine Seitenführung 62e, 64e und jeweils eine Vertikalführung 66e, 68e auf. Die Vertikalführungen 66e, 68e schließen mit den Seitenführungen 62e, 64e jeweils einen Winkel von 90° ein. Dabei zeigen die Vertikalführungen 66e, 68e zueinander hin. Die Seitenführungen 62e, 64e schließen jeweils einen Winkel von 90° zur Zwischenwandung 56e ein. Die Führungsprofile 58e, 60e weisen an ihren freien Enden der Vertikalführungen 66e, 68e in einander zugewandte Richtungen. Die Führungsprofile 58e, 60e und die Zwischenwandung 56e bilden eine Kederschiene 70e, in welche die Wischleiste 40e eingeführt ist.

Das Halteelement 12e ist in einem Extrusionsverfahren einstückig aus Polyethylen hergestellt. Ein Fachmann wird in diesem Zusammenhang verschiedene, als sinnvoll erscheinende Kunststoffe in Erwägung ziehen, wie insbesondere Polypropylen, Polyamid, Polyvinylchlorid und/oder Polystyrol.

Die Windabweisereinheit 22e ist in einem Coextrusionsverfahren aus zwei unterschiedlich harten Windabweiserteilelementen 32e, 34e, 42e hergestellt. Das erste Windabweiserteilelement 32e weist zwei nach außen hin konkav ausgebildete Windabweiserseiten 76e, 78e auf. Zur Verstärkung der Windabweisereinheit 22e weist das erste Windabweiserteilelement 32e einen Verbindungssteg 80e auf, der die konkaven Windabweiserseiten 76e, 78e miteinander verbindet. Der Verbindungssteg 80e und die Windabweiserseiten 76e, 78e umschließen einen Längskanal 82e, der einen dreieckigen Querschnitt umfasst.

Das erste Windabweiserteilelement 32e ist einstückig mit dem zweiten Windabweiserteilelement 34e, 42e ausgebildet und ist zur Abweisung von Fahrtwind vorgesehen. Das zweite Windabweiserteilelement 34e, 42e weist eine höhere Festigkeit und Härte auf als das erste Windabweiserteilelement 32e. Am zweiten Windabweiserteilelement 34e, 42e sind L-förmige Befestigungsmittel 44e, 46e sowie an die Befestigungsmittel 44e, 46e angrenzende Auflagekörper 48e, 50e angeformt. Das härtere Windabweiserteilelement 34e, 42e umgibt das Halteelement 12e im Bereich des Längsführungskanals 14e.

Ferner weist das zweite Windabweiserteilelement 34e, 42e zwei Auflagestege 72e, 74e auf. Die Auflagestege 72e, 74e liegen mit ihren freien Enden am Federelement 16e an einer von der Wischleiste 40e abgewandten Seite an. Die Auflagestege 72e, 74e sind zur Übertragung von Anpresskräften vorgesehen, die an der Windabweisereinheit 22e bei Auftreffen von Fahrtwind entstehen. Die Auflagestege 72e, 74e erstrecken sich über die gesamte Länge der Windabweisereinheit 22e. Die Auflagestege 72e, 74e vermeiden eine Bewegung des Federelements 16e in Vertikalrichtung 86e. Die Vertikalrichtung 86e erstreckt sich senkrecht zur Längsrichtung und senkrecht zur Wischrichtung 88e.

Das Federelement 16e ist in den Längsführungskanal 14e eingelassen. Das Federelement 16e ist aus einem Federstahl hergestellt und dazu vorgesehen, die Halteeinheit 10e elastisch auslenkbar zu formen.

Zu einer Montage wird zunächst das Federelement 16e in den Längsführungskanal 14e eingeführt. Anschließend wird die Wischleiste 40e in die Kederschiene 70e eingeschoben und bildet einen Formschluss mit dem Halteelement 12e. Die Windabweisereinheit 22e wird nun über das Halteelement 12e geschoben und ist dann formschlüssig mit diesem verbunden.

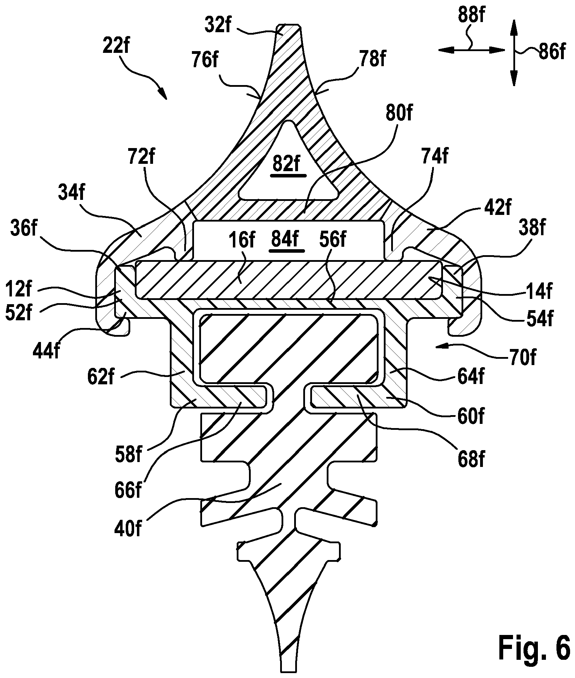

Figur 6 zeigt ein weiteres Ausführungsbeispiel einer erfindungsgemäßen Wischvorrichtung mit einer Halteeinheit 10f mit einem Halteelement 12f, das einen Längsführungskanal 14f zur Führung eines Federelements 16f aufweist, sowie eine Windabweisereinheit 22f in einer Schnittdarstellung. Die Schnittebene verläuft senkrecht zu einer Längsrichtung des Halteelements 12f.

Der Längsführungskanal 14f ist wannenförmig ausgebildet. Der Längsführungskanal 14f ist in Richtung der Windabweisereinheit 22f über die gesamte Breite und Länge geöffnet.

Zur Führung des Federelements 16f weist der Längsführungskanal 14f Seitenwandungen 52f, 54f auf. An die Seitenwandungen 52f, 54f ist ferner eine Zwischenwandung 56f angeordnet, die den Längsführungskanal 14f in Richtung einer Wischleiste 40f abschließt. Die Seitenwandungen 52f, 54f erstrecken sich von der Zwischenwandung 56f aus in eine von der Wischleiste 40f abgewandte Richtung. Das Halteelement 12f weist eine Längsöffnung 84f auf, die den Längsführungskanal 14f zur Windabweisereinheit 22f hin vollständig öffnet.

An der Zwischenwandung 56f sind zwei L-förmige Führungsprofile 58f, 60f der Halteeinheit 10f angeordnet. Die Führungsprofile 58f, 60f sind einstückig mit dem Halteelement 12f ausgebildet. Die Führungsprofile 58f, 60f weisen jeweils eine Seitenführung 62f, 64f und jeweils eine Vertikalführung 66f, 68f auf. Die Vertikalführungen 66f, 68f schließen mit den Seitenführungen 62f, 64f jeweils einen Winkel von 90° ein. Dabei zeigen die Vertikalführungen 66f, 68f zueinander hin. Die Seitenführungen 62f, 64f schließen jeweils einen Winkel von 90° zur Zwischenwandung 56f ein. Die Führungsprofile 58f, 60f weisen an ihren freien Enden der Vertikalführungen 66f, 68f in einander zugewandte Richtungen. Die Führungsprofile 58f, 60f und die Zwischenwandung 56f bilden eine Kederschiene 70f, in welche die Wischleiste 40f eingeführt ist.

Das Halteelement 12f ist in einem Extrusionsverfahren einstückig aus Polyethylen hergestellt. Ein Fachmann wird in diesem Zusammenhang verschiedene, als sinnvoll erscheinende Kunststoffe in Erwägung ziehen, wie insbesondere Polypropylen, Polyamid, Polyvinylchlorid und/oder Polystyrol.

Die Windabweisereinheit 22f ist in einem Coextrusionsverfahren aus zwei unterschiedlich harten Windabweiserteilelementen 32f, 34f, 42f hergestellt. Das erste Windabweiserteilelement 32f weist zwei nach außen hin konkav ausgebildete Windabweiserseiten 76f, 78f auf. Zur Verstärkung der Windabweisereinheit 22f weist das erste Windabweiserteilelement 32f einen Verbindungssteg 80f auf, der die konkaven Windabweiserseiten 76f, 78f miteinander verbindet. Der Verbindungssteg 80f und die Windabweiserseiten 76f, 78f umschließen einen Längskanal 82f, der einen dreieckigen Querschnitt umfasst.

Das erste Windabweiserteilelement 32f ist einstückig mit dem zweiten Windabweiserteilelement 34f, 42f ausgebildet und ist zur Abweisung von Fahrtwind vorgesehen. Das zweite Windabweiserteilelement 34f, 42f weist eine höhere Festigkeit und Härte auf als das erste Windabweiserteilelement 32f. Am zweiten Windabweiserteilelement 34f, 42f sind L-förmige Befestigungsmittel 44f, 46f angeformt. Das härtere Windabweiserteilelement 34f, 42f umgibt das Halteelement 12f im Bereich des Längsführungskanals 14f.

Ferner weist das zweite Windabweiserteilelement 34f, 42f zwei Auflagestege 72f, 74f auf. Die Auflagestege 72f, 74f liegen mit ihren freien Enden am Federelement 16f an einer von der Wischleiste 40f abgewandten Seite an. Die Auflagestege 72f, 74f sind zur Übertragung von Anpresskräften vorgesehen, die an der Windabweisereinheit 22f bei Auftreffen von Fahrtwind entstehen. Die Auflagestege 72f, 74f erstrecken sich über die gesamte Länge der Windabweisereinheit 22f. Die Auflagestege 72f, 74f vermeiden eine Bewegung des Federelements 16f in eine Vertikalrichtung 86f. Die Vertikalrichtung 86f erstreckt sich senkrecht zur Längsrichtung und senkrecht zu einer Wischrichtung 88f.

Das Federelement 16f ist in den Längsführungskanal 14f eingelassen. Das Federelement 16f ist aus einem Federstahl hergestellt und dazu vorgesehen, die Halteeinheit 10f elastisch auslenkbar zu formen.

Zu einer Montage wird zunächst das Federelement 16f in den Längsführungskanal 14f eingeführt. Anschließend wird die Wischleiste 40f in die Kederschiene 70f eingeschoben und bildet einen Formschluss mit dem Halteelement 12f. Die Windabweisereinheit 22f wird nun über das Halteelement 12f geschoben und ist dann formschlüssig mit diesem verbunden.

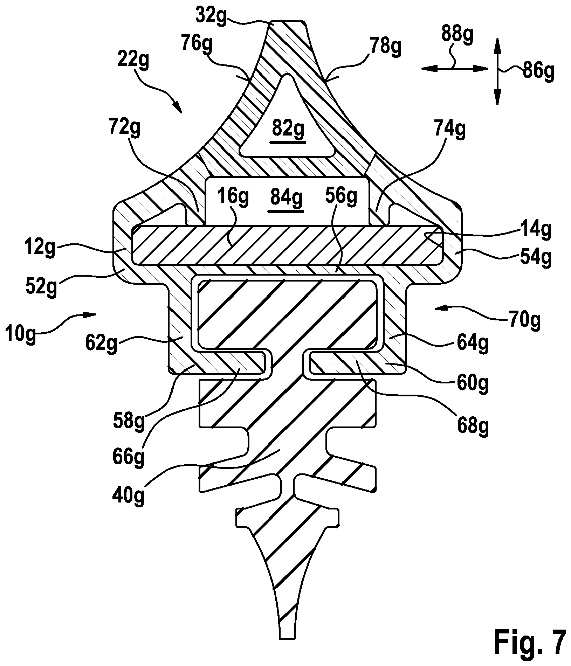

Figur 7 zeigt ein weiteres Ausführungsbeispiel einer erfindungsgemäßen Wischvorrichtung mit einer Halteeinheit 10g mit einem Halteelement 12g, das einen Längsführungskanal 14g zur Führung eines Federelements 16g aufweist, sowie eine Windabweisereinheit 22g in einer Schnittdarstellung. Die Schnittebene verläuft senkrecht zu einer Längsrichtung des Halteelements 12g.

Der Längsführungskanal 14g ist wannenförmig ausgebildet. Der Längsführungskanal 14g ist in Richtung der Windabweisereinheit 22g über die gesamte Breite und Länge geöffnet.

Zur Führung des Federelements 16g weist der Längsführungskanal 14g Seitenwandungen 52g, 54g auf. An die Seitenwandungen 52g, 54g ist ferner eine Zwischenwandung 56g angeordnet, die den Längsführungskanal 14g in Richtung einer Wischleiste 40g abschließt. Die Seitenwandungen 52g, 54g erstrecken sich von der Zwischenwandung 56g aus in eine von der Wischleiste 40g abgewandte Richtung. Das Halteelement 12g weist eine Längsöffnung 84g auf, die den Längsführungskanal 14g zur Windabweisereinheit 22g hin vollständig öffnet.

An der Zwischenwandung 56g sind zwei L-förmige Führungsprofile 58g, 60g der Halteeinheit 10g angeordnet. Die Führungsprofile 58g, 60g sind einstückig mit dem Halteelement 12g ausgebildet. Die Führungsprofile 58g, 60g weisen jeweils eine Seitenführung 62g, 64g und jeweils eine Vertikalführung 66g, 68g auf. Die Vertikalführungen 66g, 68g schließen mit den Seitenführungen 62g, 64g jeweils einen Winkel von 90° ein. Dabei zeigen die Vertikalführungen 66g, 68g zueinander hin. Die Seitenführungen 62g, 64g schließen jeweils einen Winkel von 90° zur Zwischenwandung 56g ein. Die Führungsprofile 58g, 60g weisen an ihren freien Enden der Vertikalführungen 66g, 68g in einander zugewandte Richtungen. Die Führungsprofile 58g, 60g und die Zwischenwandung 56g bilden eine Kederschiene 70g, in welche die Wischleiste 40g eingeführt ist.

Die Windabweisereinheit 22g ist in einem Coextrusionsverfahren aus zwei unterschiedlich harten Windabweiserteilelementen 32g, 34g hergestellt. Das erste Windabweiserteilelement 32g weist zwei nach außen hin konkav ausgebildete Windabweiserseiten 76g, 78g auf. Zur Verstärkung der Windabweisereinheit 22g weist das erste Windabweiserteilelement 32g einen Verbindungssteg 80g auf, der die konkaven Windabweiserseiten 76g, 78g miteinander verbindet. Der Verbindungssteg 80g und die Windabweiserseiten 76g, 78g umschließen einen Längskanal 82g, der einen dreieckigen Querschnitt umfasst.

Das erste Windabweiserteilelement 32g ist einstückig mit dem zweiten Windabweiserteilelement 34g ausgebildet und ist zur Abweisung von Fahrtwind vorgesehen. Das zweite Windabweiserteilelement 34g weist eine höhere Festigkeit und Härte auf als das erste Windabweiserteilelement 32g. Das zweite Windabweiserteilelement 34g ist einstückig mit dem Halteelement 12g ausgebildet und aus einem Kunststoff hergestellt. Ein Fachmann wird in diesem Zusammenhang verschiedene, als sinnvoll erscheinende Kunststoffe in Erwägung ziehen, wie insbesondere Polyethylen, Polypropylen, Polyamid, Polyvinylchlorid und/oder Polystyrol.

Ferner weist das zweite Windabweiserteilelement 34g zwei Auflagestege 72g, 74g auf. Die Auflagestege 72g, 74g liegen mit ihren freien Enden am Federelement 16g an einer von der Wischleiste 40g abgewandten Seite an. Die Auflagestege 72g, 74g sind zur Übertragung von Anpresskräften vorgesehen, die an der Windabweisereinheit 22g bei Auftreffen von Fahrtwind entstehen. Die Auflagestege 72g, 74g erstrecken sich über die gesamte Länge der Windabweisereinheit 22g. Die Auflagestege 72g, 74g vermeiden eine Bewegung des Federelements 16g in eine Vertikalrichtung 86g. Die Vertikalrichtung 86g erstreckt sich senkrecht zur Längsrichtung und senkrecht zur Wischrichtung 88g.

Das Federelement 16g ist in den Längsführungskanal 14g eingelassen. Das Federelement 16g ist aus einem Federstahl hergestellt und dazu vorgesehen, die Halteeinheit 10g elastisch auslenkbar zu formen.

Zu einer Montage wird zunächst das Federelement 16g in den Längsführungskanal 14g eingeführt. Anschließend wird die Wischleiste 40g in die Kederschiene 70g eingeschoben und bildet einen Formschluss mit dem Halteelement 12g.

## Patentansprüche

1. Wischvorrichtung, insbesondere Kraftfahrzeugscheibenwischvorrichtung, mit einem Federelement (16a - 16g) und einer Halteeinheit (10a - 10g), die ein Halteelement (12a - 12g) mit einem Längsführungskanal (14a - 14g) zur Führung des Federelements (16a - 16g) aufweist, und mit einer Windabweisereinheit (22a - 22g), wobei die Windabweisereinheit (22a - 22g) zumindest einen sich von einer Innenkontur der Windabweisereinheit (22a - 22g) fortsatzmäßig erstreckenden Auflagesteg (72a - 72g, 74a - 74g) aufweist, der dazu vorgesehen ist, auftretende Anpresskräfte von der Windabweisereinheit (22a - 22g) auf die Halteeinheit (10a - 10g) zu übertragen, **dadurch gekennzeichnet, dass** der zumindest eine Auflagesteg (72a - 72g, 74a - 74g) einen zwischen dem Längsführungskanal (14a - 14g) und der Windabweisereinheit (22a - 22g) angeordneten Längskanal in zwei Längskanäle unterteilt und somit beidseitig an einen Längskanal angrenzt und mit einem freien Ende am Halteelement (12a - 12c) anliegt, oder der zumindest eine Auflagesteg (72d - 72g, 74d - 74g) mit einem freien Ende am Federelement (16d - 16g) anliegt.

2. Wischvorrichtung nach einem der vorhergehenden Ansprüche, **dadurch gekennzeichnet, dass** die Windabweisereinheit (22a - 22g) in einem Coextrusionsverfahren hergestellt ist.

3. Wischvorrichtung nach Anspruch 2, **dadurch gekennzeichnet, dass** die Windabweisereinheit (22a - 22g) zwei unterschiedlich harte Windabweiserteilelemente (32a - 32g, 34a - 34g) aufweist.

4. Wischvorrichtung nach Anspruch 3, **dadurch gekennzeichnet, dass** das härtere Windabweiserteilelement (34a - 34g) die Windabweisereinheit (22a - 22g) seitlich abschließt.

5. Wischvorrichtung zumindest nach Anspruch 3, **dadurch gekennzeichnet, dass** das weichere Windabweiserteilelement (32a - 32g) einen Längskanal (82a - 82g) aufweist, der einen dreieckigen Querschnitt umfasst.

6. Wischvorrichtung nach einem der vorhergehenden Ansprüche, **dadurch gekennzeichnet, dass** die Windabweisereinheit (22b - 22g) am Halteelement (12b - 12g) im Bereich des Längsführungskanals (14b - 14g) zumindest teilweise seitlich anliegt.

7. Wischvorrichtung zumindest nach Anspruch 4, **dadurch gekennzeichnet, dass** das Halteelement (12a - 12g) eine Längsöffnung (84a - 84g) aufweist, die den Längsführungskanal (14a - 14g) zur Windabweisereinheit (22a - 22g) hin zumindest teilweise öffnet.

## Claims

1. Wiper device, particularly a motor vehicle windscreen wiper device, having a spring element (16a - 16g) and a retaining unit (10a - 10g), which retaining unit comprises a retaining element (12a - 12g) with a longitudinal guide channel (14a - 14g) for guiding the spring element (16a - 16g), and having a wind deflector unit (22a - 22g), wherein the wind deflector unit (22a - 22g) comprises at least one supporting web (72a - 72g, 74a - 74g) extending by prolongations from an inner contour of the wind deflector unit (22a - 22g), which supporting web is provided to transfer contact pressing forces which occur from the wind deflector unit (22a - 22g) onto the retaining unit (10a - 10g), **characterized in that** the at least one supporting web (72a - 72g, 74a - 74g) divides a longitudinal channel disposed between the longitudinal guide channel (14a - 14g) and the wind deflector unit (22a - 22g) into two longitudinal channels and therefore abuts a longitudinal channel on both sides and bears against the retaining element (12a-12c) with one free end, or the at least one supporting web (72d - 72g, 74d - 74g) bears against the spring element (16d - 16g) with one free end.

2. Wiper device according to one of the preceding claims, **characterized in that** the wind deflector unit (22a - 22g) is produced using a coextrusion process.

3. Wiper device according to Claim 2, **characterized in that** the wind deflector unit (22a - 22g) comprises two wind deflector subcomponents (32a - 32g, 34a - 34g) of different hardnesses.

4. Wiper device according to Claim 3, **characterized in that** the harder wind deflector subcomponent (34a - 34g) closes the wind deflector unit (22a - 22g) laterally.

5. Wiper device according to Claim 3, **characterized in that** the softer wind deflector subcomponent (32a - 32g) comprises a longitudinal channel (82a - 82g) which includes a triangular cross-section.

6. Wiper device according to one of the preceding claims, **characterized in that** the wind deflector unit (22b - 22g) bears against the retaining element (12b - 12g) at least partially laterally in the region of the longitudinal guide channel (14b - 14g).

7. Wiper device according to Claim 4, **characterized in that** the retaining element (12a - 12g) has a longitudinal opening (84a - 84g), which opens the longitudinal guide channel (14a - 14g) towards the wind deflector unit (22a - 22g) at least partially.

## Revendications

1. Ensemble d'essuyage, en particulier ensemble d'essuie - glace pour véhicule automobile, présentant un élément élastique (16a - 16g) et une unité de maintien (10a - 10g) qui présente un élément de maintien (12a - 12g) doté d'un canal (14a - 14g) de guidage longitudinal qui guide l'élément élastique (16a - 16g), et une unité (22a - 22g) de déviation du vent, l'unité (22a - 22g) de déviation du vent présentant au moins une nervure d'appui (72a - 72g, 74a - 74g) qui déborde en appendice du contour intérieur de l'unité (22a - 22g) de déviation du vent et qui est prévue pour transférer sur l'unité de maintien (10a - 10g) les forces de poussée de l'unité (22a - 22g) de déviation du vent,
**caractérisé en ce que**
la ou les nervures d'appui (72a - 72g, 74a - 74g) divisent en deux canaux longitudinaux un canal longitudinal disposé entre le canal (14a - 14g) de guidage longitudinal et l'unité (22a - 22g) de déviation du vent et est ainsi adjacente des deux côtés à un canal longitudinal et repose par une extrémité libre sur l'élément de maintien (12a - 12c), ou la ou les nervures d'appui (72d - 72g, 74d - 74g) reposent par une extrémité libre sur l'élément élastique (16d - 16g) .

2. Ensemble d'essuyage selon la revendication précédente, **caractérisé en ce que** l'unité (22a - 22g) de déviation du vent est fabriquée dans une opération de coextrusion.

3. Ensemble d'essuyage selon la revendication 2, **caractérisé en ce que** l'unité (22a - 22g) de déviation du vent présente deux éléments (32a - 32g, 34a - 34g) de déviation du vent de duretés différentes.

4. Ensemble d'essuyage selon la revendication 3, **caractérisé en ce que** l'élément (34a - 34g) le plus dur de déviation du vent ferme latéralement l'unité (22a - 22g) de déviation du vent.

5. Ensemble d'essuyage au moins selon la revendication 3, **caractérisé en ce que** l'élément (32a - 32g) le moins dur de déviation du vent présente un canal longitudinal (82a - 82g) de section transversale triangulaire.

6. Ensemble d'essuyage selon l'une des revendications précédentes, **caractérisé en ce qu'**une unité (22b - 22g) de déviation du vent repose au moins en partie latéralement sur l'élément de maintien (12b - 12g) au niveau du canal (14b - 14g) de guidage longitudinal.

7. Ensemble d'essuyage au moins selon la revendication 4, **caractérisé en ce que** l'élément de maintien (12a - 12g) présente une ouverture longitudinale (84a - 84g) qui ouvre au moins en partie le canal (14a - 14g) de guidage longitudinal sur l'unité (22a - 22g) de déviation du vent.
